# EUROPÄISCHE PATENTSCHRIFT

(11) **EP 2 514 583 B1**
(45) Veröffentlichungstag und Bekanntmachung des Hinweises auf die Patenterteilung: **09.07.2014**
(21) Anmeldenummer: 11003242.2
(22) Anmeldetag: 18.04.2011
(51) Int. Cl.: B29C 65/74, B29C 65/24, B29C 65/18, B65B 51/30, B65B 61/06, B65B 51/16, B65B 51/18, B26D 1/02

(54) **Einrichtung zum Schweissen und Abtrennen von Folien und dergleichen**
Device for welding and severing films and the like
Dispositif de soudage et de découpe de feuilles et analogues

(43) Veröffentlichungstag der Anmeldung: 24.10.2012
(73) Patentinhaber: Heinrich Kuper GmbH & Co. KG, 33397 Rietberg (DE)
(72) Erfinder: von Mutius, Michael, 33397 Rietberg (DE); Krimphove, Bernd, 59556 Lippstadt (DE); Südbrock, Frank, 33378 Rheda-Wiedenbrück (DE)
(74) Vertreter: Schaeberle, Steffen

(56) Entgegenhaltungen:
- WO-A1-83/01926
- DE-A1- 19 734 578
- US-A1- 2003 010 439
- US-A1- 2005 167 056

## Beschreibung

Die vorliegende Erfindung betrifft eine Schweißeinrichtung zum Schweißen von Folien und dergleichen, welche eine integrierte Trenneinrichtung aufweist.

Folien oder andere schweißbare folienartige Werkstoffe werden häufig zum Verpacken von Gegenständen verwendet. Die zu verpackenden Gegenstände werden dabei mit der Folie eingeschlagen und an einer Vorderseite und einer Rückseite des Gegenstands z.B. mittels Schweißbalken verschweißt. An einer der Seiten des Gegenstands sind jedoch noch zwei übereinander liegende Folienüberhänge vorhanden, welche noch nicht verschweißt sind. Abhängig von der Folienbreite bzw. einer Breite des zu verpackenden Gegenstands kann dabei der Folienüberstand größer oder kleiner sein. Da es nicht wünschenswert ist, dass der seitliche Folienüberstand zu groß ist, wird dieser in einer einer Seitenschweißanlage zum Schweißen des Folienüberstands nachgeordneten Schneideinrichtung abgeschnitten.

Aus der EP 1 027 981 A1 ist eine Verschweißeinrichtung bekannt, bei der ein kombiniertes Trenn-Schweißrad vorgesehen ist, um einen Schritt des Schweißens und Abtrennens der seitlich überstehenden Folie in einem Schritt auszuführen. Hierbei ist eine Riemenanordnung mit insgesamt vier Riemen vorgesehen, um einen Transport des Folienüberstands durch die Verschweißeinrichtung zu gewährleisten. Das Trenn-Schweißrad ist dabei hart bzw. starr ausgebildet und ein am Trenn-Schweißrad anliegendes, mitlaufendes Gegenrad weist eine flexible Oberfläche auf, um eine Beschädigung des Trenn-Schweißrads während des Kontakts mit dem Gegenrad zu vermeiden. Neben der relativ aufwändigen Riemenkonstruktion hat diese bekannte Verschweißeinrichtung ferner den Nachteil, dass zwischen dem Trenn-Schweißrad und dem Gegenrad nur ein kurzer, linienhafter Kontakt möglich ist, was sich unter Umständen negativ auf die hergestellte Schweißnaht auswirken kann. Ferner beschränkt dieser kurze, linienhafte Schweißkontakt eine Durchlaufgeschwindigkeit durch die Verschweißeinrichtung.

WO 83/01926 zeigt eine Schweißvorrichtung zum Verbinden einer Vielzahl von Lagen aus laminaren thermoplastischen Materialien mit Klemmbacken. Die Schweißnaht wird durch örtliches Aufschmelzen der Lagen und durch Aufheizen ihrer vorstehenden Kanten bis zu einem bestimmten Grad und während einer vorbestimmten Zeitlänge durch ein elektrisch beheiztes Band hergestellt. Das Band kann auch als Anschlag dienen, um die Kanten der Lagen vor dem Klemmen und Schweißen zu bestimmen, oder sogar als Messer, um gleichzeitig zu trennen und zwei Schweißnähte längs der Trennkanten zu bilden. Statt stationärer Klemmbacken können kontinuierlich bewegliche Greifriemen benutzt werden, um die Lagen an dem beheizten Band vorbeizuschieben.

Die DE 197 34 578 A1 zeigt eine Vorrichtung zum Verschweißen von Folien und ein Folienschweißverfahren. Dabei werden Folienmaterialien, wie Klarsichthüllen, Schnellhefter und dergleichen, mit einem Rotationskörper, in den das Folienmaterial kontaktierende Schweißelektroden integriert sind, verschweißt.

Es ist daher Aufgabe der vorliegenden Erfindung, eine Schweißeinrichtung für Folien oder dergleichen bereitzustellen, welche bei einfachem und kostengünstigem Aufbau ein sicheres Verschweißen und gleichzeitig ein Abtrennen von überstehendem Folienmaterial ermöglicht.

Diese Aufgabe wird durch eine Schweißeinrichtung mit den Merkmalen des Anspruchs 1 gelöst. Die Unteransprüche zeigen bevorzugte Weiterbildungen der Erfindung.

Die erfindungsgemäße Schweißeinrichtung umfasst ein beheiztes Schweißrad und eine Trenneinrichtung, um einen Folienüberstand, welcher nicht verschweißt werden soll, abzutrennen. Ferner umfasst die erfindungsgemäße Schweißeinrichtung eine Gegendruckeinheit mit einem umlaufenden Riemen. Der Riemen ist dabei derart am Schweißrad angeordnet, dass eine Druckkraft zwischen dem Riemen und dem Schweißrad wirkt, um eine dazwischen befindliche Folie zu verschweißen. Die Verwendung des Riemens hat dabei den Vorteil, dass der Riemen, beispielsweise unter Verwendung von zwei Rollen, derart am Schweißrad angeordnet werden kann, dass ein flächenhaftes in Kontakt bringen der Folie mit dem Schweißrad möglich ist. Hierdurch kann das im Stand der Technik vorhandene Problem der nur linienhaften Verschweißung überwunden werden. Der Riemen wird über einen längeren Umfangsbereich am Schweißrad entlang geführt, wobei sich die zu schweißende Folie zwischen Riemen und Schweißrad befindet. Dadurch lassen sich erfindungsgemäß qualitativ bessere und insbesondere auch schnellere Schweißergebnisse erzielen. Dadurch kann auch eine Durchlaufzeit einer Folie oder dergleichen durch die Schweißeinrichtung reduziert werden, da eine längere Schweißstrecke durch den am Schweißrad anliegenden Riemen bereitgestellt wird. Ein weiterer Vorteil der Verwendung des Riemens liegt darin, dass vorzugsweise eine Druckkraft zwischen dem Riemen und dem Schweißrad durch beispielsweise Vorsehen eines verstellbaren Riemenrad, einstellbar ist. Dadurch können beispielsweise für verschiedene Materialien verschiedene Andrückkräfte realisiert werden. Ferner können dadurch auch für verschiedene Materialien unterschiedliche Flächendruckbereiche zwischen Riemen und Schweißrad realisiert werden.

Weiter bevorzugt umfasst die Gegendruckeinheit ferner ein Formgebungselement. Dabei ist der Riemen zwischen dem Formgebungselement und dem Schweißrad angeordnet. Hierdurch kann der Riemen eine entsprechen der Form des Formgebungselements vorgegebene Form einnehmen und am Außenumfang des Schweißrades entlang geführt werden. Dadurch kann eine Variabilität der Gegendruckfläche zwischen Riemen und Schweißrad erhalten werden.

Das Formgebungselement weist vorzugsweise einen Formgebungsbogen auf, dessen Radius im Wesentlichen einem maximalen Radius des Schweißrades entspricht. Hierdurch lassen sich besonders gute Schweißergebnisse erzielen.

Weiter bevorzugt weist das Formgebungselement benachbart zu beiden Seiten des Formgebungsbogens einen ersten und zweiten abgerundeten Übergangsbereich auf. Hierdurch kann der Riemen am Formgebungselement umgelenkt werden und so ein besonders kompakter Aufbau der Vorrichtung realisiert werden.

Gemäß der vorliegenden Erfindung ist die Trenneinrichtung, vorzugsweise als ein separates Bauteil, an der Gegendruckeinheit angeordnet. Hierdurch kann insbesondere eine einfache Erreichbarkeit und ein schneller und sicherer Austausch der Trenneinrichtung ausgeführt werden.

Weiter bevorzugt umfasst die Schweißeinrichtung eine zweite Heizeinrichtung, um die Trenneinrichtung und/oder der Riemen zu beheizen. Durch diese Maßnahme können ebenfalls die Schweißergebnisse signifikant verbessert werden. Besonders bevorzugt heizt die zweite Heizeinrichtung dabei gleichzeitig auch noch den Riemen. Die zweite Heizeinrichtung kann beispielsweise ein Heizstrahler oder eine in das Formgebungselement integrierte Heizpatrone sein.

Besonders bevorzugt ist der Riemen mittels einer Rolleneinheit, umfassend mehrere Rollen, umlaufend geführt. Weiter bevorzugt ist dabei wenigstens eine der Rollen als Spannrolle ausgebildet. Vorzugsweise kann durch eine Veränderung der Relativposition der Spannrolle zum Riemen ferner auch ein Gegendruck, welcher durch den Riemen auf das Schweißrad ausgeübt wird, verändert werden.

Um eine möglichst variable Schweißeinrichtung bereitzustellen, ist weiter bevorzugt eine Position der Trenneinrichtung verstellbar. Hierdurch können beispielsweise unterschiedlich dicke Folien oder dergleichen mit der gleichen Schweißeinrichtung geschweißt werden.

Bevorzugt ist eine Schneidklinge der Trenneinrichtung in einem spitzen Winkel zu einer Transportrichtung der Folie durch die Schweißeinrichtung angeordnet. Hierdurch kann ein sicheres Schnittergebnis ohne ausgerissene Kanten oder dergleichen erreicht werden, da die Folie im spitzen Winkel zur Schneidklinge zugeführt wird.

Weiter bevorzugt ist ein Schneidpunkt, an welchem die zugeführte Folie mit der Trenneinrichtung in Kontakt kommt, näher an einem Einlaufbereich der Folie in die Schweißeinrichtung angeordnet als an einem Auslaufbereich der Folie aus der Schweißeinrichtung. Dies stellt sicher, dass die Folie noch nicht zu stark erwärmt ist, so dass ein problemloser Schneidvorgang möglich ist. Falls nämlich die Folie schon zu stark erwärmt ist, beginnt schon eine leichte plastische Verformung der Folie, so dass die Schneidergebnisse des Folienüberstands keine hohe Qualität aufweisen.

Weiter bevorzugt ist das Formgebungselement zweiteilig mit einem ersten und zweiten Formgebungsteil gebildet. Die Trenneinrichtung ist dabei zwischen dem ersten und zweiten Formgebungsteil angeordnet. Hierdurch kann eine sichere Positionierung der Trenneinrichtung vorgenommen werden, wobei insbesondere auch eine Verletzungsgefahr für Personen an der Schneideinrichtung reduziert ist. Weiter bevorzugt weisen das erste und zweite Formgebungsteil jeweils ein, insbesondere austauschbar angeordnetes Kontaktelement für einen Kontakt mit dem Riemen auf. Hierdurch kann eine schnelle und einfache Auswechselbarkeit der Kontaktelemente, welche beispielsweise durch den umlaufenden Riemen einen Verschleiß aufweisen können, erreicht werden.

Weiter bevorzugt weist das Formgebungselement an dem mit dem Riemen in Kontakt befindlichen Bereich eine Beschichtung auf, um eine Reibung zwischen Riemen und Formgebungselement zu reduzieren.

Weiter bevorzugt umfasst die Gegendruckeinheit der Schweißeinrichtung einen zweiten Riemen, welcher eine Druckkraft auf einen Transportbereich des Schweißrads ausübt, um den abgetrennten Folienüberstand von der Schweißeinrichtung abzutransportieren. Hierdurch kann sicher verhindert werden, dass der abgetrennte Folienüberstand unbeabsichtigt in den Schweißbereich der Schweißeinrichtung gelangt.

Ferner betrifft die vorliegende Erfindung eine Verpackungsmaschine mit einer erfindungsgemäßen Schweißeinrichtung.

Die erfindungsgemäße Schweißeinrichtung wird insbesondere zum Verschweißen von seitlich überstehenden Folien bei einem schon verpackten Gegenstand verwendet. Die Verpackungsfolie ist dabei bevorzugt schon an einer Vorderseite und einer Hinterseite des Gegenstandes verschweißt, so dass lediglich noch der eine seitliche Bereich offen ist, an welchem die Folie in überlappender Weise vorhanden ist. Um einen möglichst kurzen Überstand an dem seitlichen Bereich der Folie zu haben, wird daher die Folie mit der erfindungsgemäßen Schweißeinrichtung gleichzeitig verschweißt und der unerwünschte Folienüberstand abgetrennt.

Nachfolgend wird unter Bezugnahme auf die begleitende Zeichnung ein Ausführungsbeispiel einer erfindungsgemäßen Schweißeinrichtung im Detail beschrieben. In der Zeichnung ist:
- Fig. 1: eine schematische Seitenansicht der erfindungsgemäßen Schweißeinrichtung,
- Fig. 2: eine vergrößerte, teilweise geschnittene Seitenansicht der Schweißeinrichtung von Fig. 1,
- Fig. 3: eine Vorderansicht aus Richtung eines Auslaufbereichs der Schweißeinrichtung von Fig. 1, und
- Fig. 4: eine vergrößerte Seitenansicht der Gegendruckeinheit von Fig. 1.

Nachfolgend wird unter Bezugnahme auf die begleitende Zeichnung ein bevorzugtes Ausführungsbeispiel der Schweißeinrichtung 1 im Detail beschrieben.

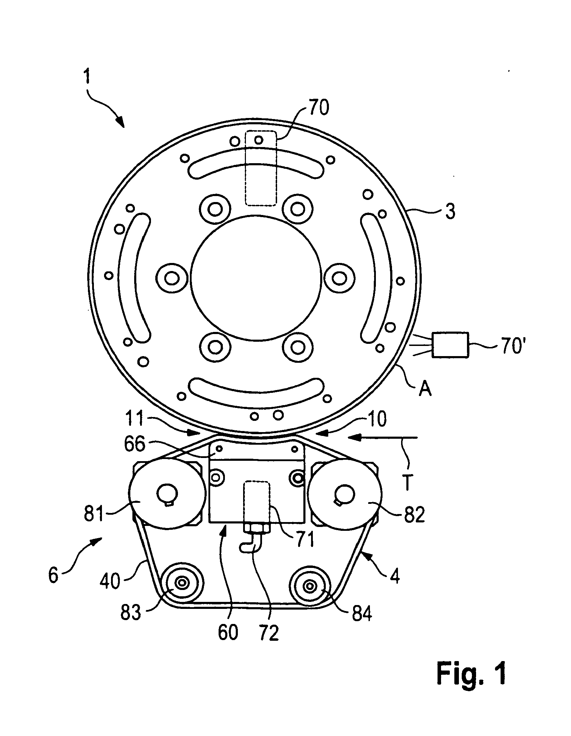

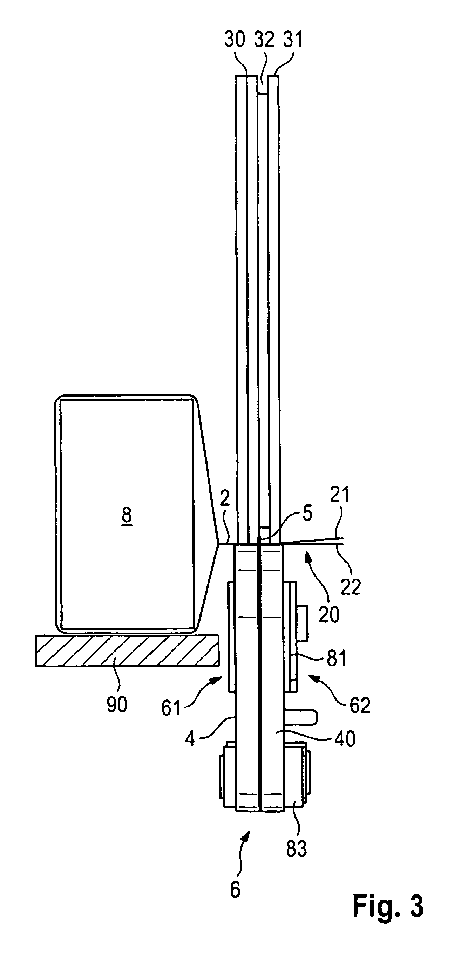

Die Schweißeinrichtung 1 umfasst ein Schweißrad 3, eine Trenneinrichtung 5 und eine Gegendruckeinheit 6. Das Schweißrad 3 wird mittels einer ersten Heizeinrichtung 70 in Form einer Heizpatrone erwärmt. Wie insbesondere aus Fig. 3 ersichtlich ist, umfasst das Schweißrad 3 einen Schweißbereich 30 und einen Transportbereich 31, welche durch eine umlaufende Nut 32 voneinander getrennt sind. Die erste Heizeinrichtung 70 heizt dabei insbesondere den Schweißbereich 30 auf. Als alternative Heizeinrichtung ist in Fig. 1 noch ein externer Heizstrahler 70' eingezeichnet. Das Schweißrad 3 wird mittels eines nicht gezeigten Antriebs angetrieben.

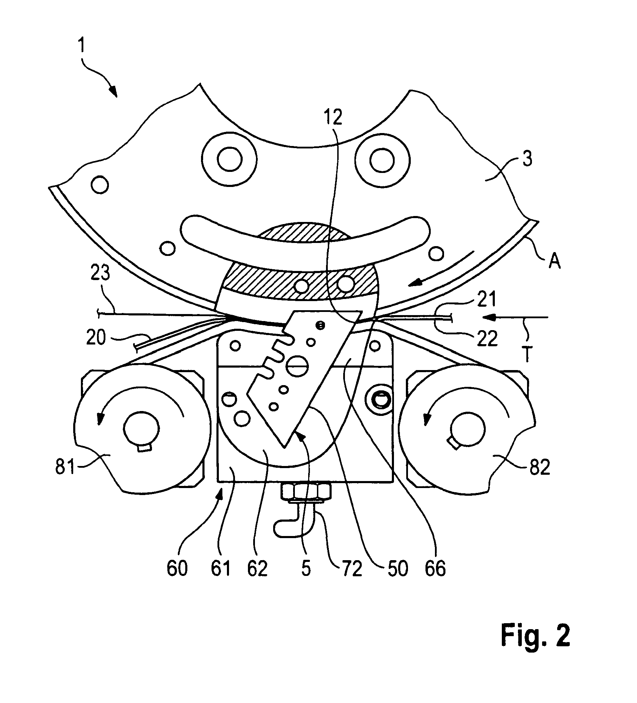

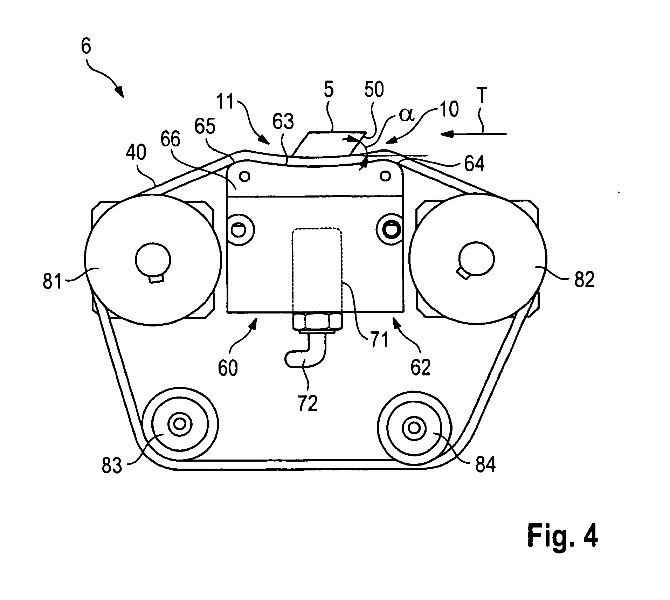

Die Trenneinrichtung 5 ist im Detail aus Fig. 2 ersichtlich und ist in diesem Ausführungsbeispiel ein Messer mit einer Klinge 50. Die Klinge 50 ist in einem spitzen Winkel α zu einer waagrechten Transportrichtung T der Folie 2 angeordnet (vergleiche Fig. 4). Der Winkel α beträgt dabei ungefähr 60°.

Die erfindungsgemäße Gegendruckeinheit 6 ist vergrößert in Fig. 4 dargestellt. Die Gegendruckeinheit 6 umfasst einen ersten umlaufenden Riemen 4 und einen zweiten umlaufenden Riemen 40 (Fig. 3). Der erste Riemen 4 ist dabei derart am Schweißrad 3 angeordnet, dass eine Druckkraft zwischen dem ersten Riemen 4 und dem Schweißrad 3 wirkt, um die zwischen dem ersten Riemen 4 und dem Schweißrad 3 befindliche Folie zu verschweißen. Hierbei ist der Riemen teilweise, d.h., über einen Teilbereich, am Außenumfang A des Schweißrades entlang geführt. Die beiden umlaufenden Riemen 4, 40 werden über eine Rollenanordnung mit einer ersten und zweiten angetriebenen Rolle 81, 82 und einer ersten und zweiten Umlenkrolle 83, 84 angetrieben. Die Gegendruckeinheit 6 umfasst ferner ein Formgebungselement 60. Das Formgebungselement 60 weist ein erstes und zweites Formgebungsteil 61, 62 auf, wobei die Trenneinrichtung 5 zwischen den beiden Formgebungsteilen 61, 62 angeordnet ist. Die beiden Formgebungsteile 61, 62 definieren dabei jeweils einen Formgebungsbogen 63, über welche ein Riemen 4, 40 jeweils geführt ist. Der Formgebungsbogen 63 geht jeweils in einen ersten Übergangsbereich 64 an einem Einlaufbereich 10 und einen zweiten Übergangsbereich 65 an einem Auslaufbereich 11 über. Ferner ist eine zweite Heizeinrichtung 71 mit einem Heizanschluss 72 vorgesehen, um insbesondere das erste Formgebungsteil 61 und den ersten Riemen 4 zu erwärmen. Die zweite Heizeinrichtung 71 heizt parallel dazu auch die Trenneinrichtung 5.

Wie insbesondere aus Fig. 3 ersichtlich ist, ist die Schweißeinrichtung 1 vorgesehen, eine Folie 2, mit welcher ein Gegenstand 8 verpackt wird, an einer Seite des Gegenstands 8 zu verschweißen und dabei einen Folienüberstand 20, welcher ein erstes und ein zweites Folienende 21, 22 aufweist, abzutrennen. Der Gegenstand 8 wurde schon in einem vorhergehenden Schritt, beispielsweise mittels Quersiegelbalken, vor und hinter dem Gegenstand verschweißt, so dass lediglich nur noch die durch die doppelte Folienlage gebildeten Folienüberstand 20 zu siegeln ist. Wie insbesondere aus Fig. 3 ersichtlich ist, ist der Gegenstand dabei auf einem Transportband 90 oder dergleichen abgelegt.

Die Funktion der erfindungsgemäßen Schweißeinrichtung ist dabei wie folgt. Der schon mit der Folie 2 eingeschlagene Gegenstand 8 wurde in einem ersten, nicht gezeigten Schnitt schon vorne und hinten quergesiegelt, so dass nur noch an der Seite eine nicht gesiegelte, doppelte Folienlage als Folienüberstand 20 vorhanden ist. Diese doppelte Folienlage steht ein gewisses Maß vom Gegenstand 8 über, um einen sicheren Siegelvorgang ausführen zu können. Wie insbesondere aus Fig. 3 ersichtlich ist, werden die beiden freien Folienenden 21, 22 des Überstands 20 in der mit T gekennzeichneten Einlaufrichtung zugeführt. Der Folienüberstand 20 beträgt ca. 300 bis 500 mm. Die beiden Folienenden 21, 22 werden dabei in einen Einlaufbereich 11 zwischen dem Schweißrad 3 und der Gegendruckeinheit 6 eingeführt. Relativ nahe am Einlaufbereich 11 ist die Trenneinrichtung 5 angeordnet. Hierdurch wird verhindert, dass die Folienenden 21, 22 aufgrund des schon erfolgten Kontaktes mit dem Schweißrad 3 und der Gegendruckeinheit 6 zu stark aufgewärmt und aufgeweicht wurden, was ein Schneiden der Folie beeinträchtigen könnte. Die Riemen 4, 40 und der Schweißbereich 30 bzw. der Transportbereich 31 klemmen dann die zugeführten Folienenden zwischen sich und transportieren diese durch die Schweißeinrichtung 1 hindurch zum Auslaufbereich 11. Die Riemen 4, 40 passen sich dabei an den Formgebungsbogen 63 der Formgebungseinheit 60 an.

Da sowohl der erste Riemen 4 als auch der Schweißbereich 30 des Schweißrads erwärmt werden, werden die beiden Folienenden beim Durchlaufen durch die Schweißeinrichtung 1 in diesem Bereich gesiegelt und als verschweißte Folie 23 aus der Schweißeinrichtung herausgeführt. Da die Temperatur am zweiten Riemen 40 und dem Transportbereich 31 des Schweißrades 3 nicht den Schmelzpunkt der Folie 2 erreicht, wird der Folienüberstand 20 lediglich abgetrennt und durch die Schweißeinrichtung 1 ohne Verschweißen hindurchgeführt. Der abgetrennte Folienüberstand 20 wird mittels des zweiten Riemens 40 und dem zweiten Formgebungsteil 62 in Verbindung mit dem Transportbereich 31 aus der Schweißeinrichtung 1 herausgeführt (vgl. Fig. 3).

Durch den langen Kontakt zwischen dem Schweißrad 3 und dem ersten Riemen 4 kann ferner eine hohe Durchlaufgeschwindigkeit für die Folie erreicht werden, wodurch die Schweißzeiten für die Seitennähte am verpackten Gegenstand 8 signifikant gesenkt werden können.

Somit kann erfindungsgemäß ein seitliches Verschweißen eines Folienüberstandes 20 schnell und sauber realisiert werden. Eine Umlaufgeschwindigkeit des Schweißrades 3 entspricht dabei einer Umlaufgeschwindigkeit der beiden Riemen 4, 40. Dabei ist es möglich, dass das seitliche Verschweißen der Folie relativ nahe am verpackten Gegenstand 8 erfolgt. Durch die Ausgestaltung der Gegendruckeinheit mit dem Riemen 4 und dem Formgebungselement 60 kann dabei eine relativ lange Schweißstrecke zwischen Schweißrad 3 und Riemen 4 realisiert werden, so dass ein sehr sicherer und qualitativ hoher Schweißvorgang realisiert werden kann.

Der Riemen wird vorzugsweise aus einem leicht elastischen Material, wie beispielsweise Naturkautschuk, hergestellt, so dass während des Schweißvorgangs der Riemen 4 mit einem ausreichenden Druck gegen das Schweißrad 3 gedrückt wird.

### Bezugszeichenliste

- 1: Schweißeinrichtung
- 2: Folie
- 3: Schweißrad
- 4: Erster Riemen
- 5: Trenneinrichtung
- 6: Gegendruckeinheit
- 8: Gegenstand
- 10: Einlaufbereich
- 11: Auslaufbereich
- 20: Folienüberstand
- 21: Erstes Folienende
- 22: Zweites Folienende
- 23: Verschweißte Folie
- 30: Schweißbereich
- 31: Transportbereich
- 32: Nut
- 40: Zweiter Riemen
- 50: Schneidklinge
- 60: Formgebungselement
- 61: Erstes Formgebungsteil
- 62: Zweites Formgebungsteil
- 63: Formgebungsbogen
- 64: Erster Übergangsbereich
- 65: Zweiter Übergangsbereich
- 66: Kontaktelement
- 70: Erste Heizeinrichtung
- 70': externer Heizstrahler
- 71: Zweite Heizeinrichtung
- 72: Heizanschluss
- 81: Erste angetriebene Rolle
- 82: Zweite angetrieben Rolle
- 83: Erste Umlenkrolle
- 84: Zweite Umlenkrolle
- 90: Förderband
- A: Außenumfang
- T: Transportrichtung

## Patentansprüche

1. Schweißeinrichtung für Folien (2) oder dergleichen, umfassend:
- ein Schweißrad (3),
- eine erste Heizeinrichtung (70) zum Beheizen des Schweißrads (3),
- eine Trenneinrichtung (5), welche eingerichtet ist, einen Folienüberstand (20) abzutrennen und
- eine Gegendruckeinheit (6),
**dadurch gekennzeichnet, dass**
- die Gegendruckeinheit (6) wenigstens einen umlaufenden ersten Riemen (4) aufweist,
- wobei der Riemen (4) derart am Schweißrad (3) angeordnet ist, dass eine Druckkraft zwischen dem Riemen (4) und einem Schweißbereich (30) des Schweißrads (3) wirkt, um eine zwischen dem Riemen (4) und dem Schweißrad (3) befindliche Folie (2) zu verschweißen,
- wobei der Riemen (4) teilweise an einem Außenumfang (A) des Schweißrades (3) entlang geführt ist, und
- wobei die Trenneinrichtung (5) an der Gegendruckeinheit (6) angeordnet ist.

2. Schweißeinrichtung nach Anspruch 1, **dadurch gekennzeichnet, dass** die Gegendruckeinheit (6) ein Formgebungselement (60) aufweist, wobei der Riemen (4) zwischen dem Formgebungselement (60) und dem Schweißrad (3) angeordnet ist.

3. Schweißeinrichtung nach Anspruch 2, **dadurch gekennzeichnet, dass** das Formgebungselement (60) einen Formgebungsbogen (63) umfasst, dessen Radius im Wesentlichen einem maximalen Radius des Schweißrades (3) entspricht.

4. Schweißeinrichtung nach Anspruch 3, **dadurch gekennzeichnet, dass** das Formgebungselement (60) benachbart zu beiden Seiten des Formgebungsbogens (63) einen ersten Übergangsbereich (64) und einen zweiten Übergangsbereich (65) aufweist.

5. Schweißeinrichtung nach einem der vorhergehenden Ansprüche, ferner umfassend eine zweite Heizeinrichtung (71), um die Trenneinrichtung (5) und/oder den ersten Riemen (4) zu beheizen.

6. Schweißeinrichtung nach einem der vorhergehenden Ansprüche, ferner umfassend eine Rolleneinheit, um welche der Riemen (4) gespannt ist, wobei wenigstens eine Rolle (81, 82) der Rolleneinheit antreibbar ist.

7. Schweißeinrichtung nach einem der vorhergehenden Ansprüche, **dadurch gekennzeichnet, dass** eine Schneidklinge (50) der Trenneinrichtung (5) in einem spitzen Winkel (α) zu einer Transportrichtung (T) der Folie (2) angeordnet ist.

8. Schweißeinrichtung nach einem der vorhergehenden Ansprüche, **dadurch gekennzeichnet, dass** ein Schneidpunkt (12), an welchem die zugeführte Folie (2) mit der Trenneinrichtung (5) in Kontakt kommt, näher an einem Einlaufbereich (10) der Folie in die Schweißeinrichtung als an einem Auslaufbereich (11) der Folie angeordnet ist.

9. Schweißeinrichtung nach einem der vorhergehenden Ansprüche, **dadurch gekennzeichnet, dass** das Formgebungselement (60) zweiteilig mit einem ersten Formgebungsteil (61) und einem zweiten Formgebungsteil (62) gebildet ist, wobei die Trenneinrichtung (5) zwischen dem ersten und zweiten Formgebungsteil angeordnet ist.

10. Schweißeinrichtung nach Anspruch 9, **dadurch gekennzeichnet, dass** das erste und zweite Formgebungsteil (61, 62) jeweils ein, insbesondere austauschbares, Kontaktelement (66) für einen Kontakt mit dem Riemen (4) aufweist.

11. Schweißeinrichtung nach einem der vorhergehenden Ansprüche, ferner umfassend einen zweiten Riemen (40), welcher eine Druckkraft auf einen Transportbereich (31) am Schweißrad ausübt, um den abgetrennten Folienüberstand (20) von der Schweißeinrichtung wegzutransportieren.

12. Verpackungsmaschine, umfassend eine Schweißeinrichtung nach einem der vorhergehenden Ansprüche.

## Claims

1. A welding device for films (2), or the like, comprising:
- a welding wheel (3),
- a first heating device (70) for heating the welding wheel (3),
- a separating device (5) configured to separate a film protrusion (20), and
- a counter-pressure unit (6),
**characterized in that**
- the counter-pressure unit (6) comprises at least one circulating first belt (4),
- wherein the belt (4) is arranged on the welding wheel (3) such that a compressive force is operative between the belt (4) and a welding portion (30) of the welding wheel (3) to weld a film (2) positioned between the belt (4) and the welding wheel (3),
- wherein the belt (4) is guided in part along an outer periphery (A) of the welding wheel (3), and
- wherein the separating device (5) is arranged on the counter-pressure unit (6).

2. The welding device according to claim 1, **characterized in that** the counter-pressure unit (6) comprises a shaping element (60), wherein the belt (4) is arranged between the shaping element (60) and the welding wheel (3).

3. The welding device according to claim 2, **characterized in that** the shaping element (60) comprises a shaping arc (63) having a radius substantially corresponding to a maximum radius of the welding wheel (3).

4. The welding device according to claim 3, **characterized in that** the shaping element (60) comprises a first transition portion (64) and a second transition portion (65) adjacent to both sides of the shaping arc (63).

5. The welding device according to any one of the preceding claims, further comprising a second heating device (71) to heat the separating device (5) and/or the first belt (4).

6. The welding device according to any one of the preceding claims, further comprising a roll unit around which the belt (4) is tensioned, wherein at least one roll (81, 82) of the roll unit is drivable.

7. The welding device according to any one of the preceding claims, **characterized in that** a cutting blade (50) of the separating device (5) is arranged at an acute angle (α) relative to a transport direction (T) of the film (2).

8. The welding device according to any one of the preceding claims, **characterized in that** a cutting point (12) at which the supplied film (2) gets into contact with the separating device (5) is arranged closer to an inlet portion (10) of the film into the welding device than to an outlet portion (11) of the film.

9. The welding device according to any one of the preceding claims, **characterized in that** the shaping element (60) is made in two parts with a first shaping part (61) and a second shaping part (62), wherein the separating device (5) is arranged between the first and second shaping part.

10. The welding device according to claim 9, **characterized in that** the first and second shaping device (61, 62) respectively comprise a, particularly exchangeable, contact element (66) for contact with the belt (4).

11. The welding device according to any one of the preceding claims, further comprising a second belt (40) which exerts a compressive force on a transport portion (31) on the welding wheel to transport the separated film protrusion (20) away from the welding device.

12. A packaging machine, comprising a welding device according to any one of the preceding claims.

## Revendications

1. Dispositif de soudage pour des feuilles (2) ou similaires, comprenant :
- une molette de soudage (3),
- un premier dispositif de chauffage (70) pour le chauffage de la molette de soudage (3),
- un dispositif de séparation (5) qui est aménagé afin de séparer une partie de feuille qui dépasse (20) et
- une unité de contre-pression (6),
**caractérisé en ce que**
- l'unité de contre-pression (6) présente au moins une première courroie (4) rotative,
- la courroie (4) étant agencée sur la molette de soudage (3) de telle manière qu'une force de pression agisse entre la courroie (4) et une zone de soudage (30) de la molette de soudage (3) afin de souder une feuille (2) se trouvant entre la courroie (4) et la molette de soudage (3),
- la courroie (4) étant guidée en partie le long d'une périphérie extérieure (A) de la molette de soudage (3), et
- le dispositif de séparation (5) étant disposé sur l'unité de contre-pression (6).

2. Dispositif de soudage selon la revendication 1, **caractérisé en ce que** l'unité de contre-pression (6) présente un élément de formage (60), la courroie (4) étant agencée entre l'élément de formage (60) et la molette de soudage (3).

3. Dispositif de soudage selon la revendication 2, **caractérisé en ce que** l'élément de formage (60) comporte un arc de formage (63), dont le rayon correspond sensiblement à un rayon maximal de la molette de soudage (3).

4. Dispositif de soudage selon la revendication 3, **caractérisé en ce que** l'élément de formage (60) présente, au voisinage des deux côtés de l'arc de formage (63) une première zone d'intersection (64) et une deuxième zone d'intersection (65).

5. Dispositif de soudage selon l'une quelconque des revendications précédentes, comprenant de plus un deuxième dispositif de chauffage (71) afin de chauffer le dispositif de séparation (5) et/ou la première courroie (4).

6. Dispositif de soudage selon l'une quelconque des revendications précédentes, comprenant de plus une unité de rouleaux, autour de laquelle la courroie (4) est tendue, au moins un rouleau (81, 82) de l'unité de rouleaux pouvant être entraîné.

7. Dispositif de soudage selon l'une quelconque des revendications précédentes, **caractérisé en ce qu'**une lame de coupe (50) du dispositif de séparation (5) est disposée dans un angle aigu (α) par rapport à un sens de transport (T) de la feuille (2).

8. Dispositif de soudage selon l'une quelconque des revendications précédentes, **caractérisé en ce qu'**un point de coupe (12), sur lequel la feuille amenée (2) entre en contact avec le dispositif de séparation (5), est disposé plus près d'une zone d'entrée (10) de la feuille dans le dispositif de soudage que d'une zone de sortie (11) de la feuille.

9. Dispositif de soudage selon l'une quelconque des revendications précédentes, **caractérisé en ce que** l'élément de formage (60) est formé en deux parties avec une première partie de formage (61) et une deuxième partie de formage (62), le dispositif de séparation (5) étant disposé entre la première et la deuxième partie de formage.

10. Dispositif de soudage selon la revendication 9, **caractérisé en ce que** la première et la deuxième partie de formage (61, 62) présentent respectivement un élément de contact (66), en particulier remplaçable, pour un contact avec la courroie (4).

11. Dispositif de soudage selon l'une quelconque des revendications précédentes, comprenant de plus une deuxième courroie (40) qui exerce une force de pression sur une zone de transport (31) au niveau de la molette de soudage afin de transporter la partie de feuille qui dépasse (20) séparée loin du dispositif de soudage.

12. Machine d'emballage, comprenant un dispositif de soudage selon l'une quelconque des revendications précédentes.
